# EUROPÄISCHE PATENTANMELDUNG

(11) **EP 2 295 772 A2**
(43) Veröffentlichungstag der Anmeldung: **16.03.2011**
(21) Anmeldenummer: 10170835.2
(22) Anmeldetag: 26.07.2010
(51) Int. Cl.: F02D 41/00, F02M 25/07

(54) **Anordnung zur Rückführung und Kühlung von Abgas einer Brennkraftmaschine**

(30) Priorität: 19.08.2009 DE 102009037923
(71) Anmelder: Behr America, Inc, Troy, Michigan 48083 (US)
(72) Erfinder: Bauer, Martin, 71732 Tamm (DE)
(74) Vertreter: Grauel, Andreas

(57) **Zusammenfassung**

Bei einer Anordnung (1) zur Rückführung und Kühlung von Abgas einer Brennkraftmaschine (2), insbesondere eines Dieselmotors (3), umfassend eine Abgasleitung (4), vorzugsweise mit einer Abgasturbine (8), eine Ladeluftleitung (9) mit einem, vorzugsweise von der Abgasturbine (8) antreibbarein, Ladeluftverdichter (12), eine Abgasrückführleitung (11) zur Leitung von Abgas von der Abgasleitung (4) zu der Ladeluftleitung (9), einen Abgaswärmeübertrager (13) zur Kühlung von Abgas in der Abgasrückführleitung (11) und/oder einen Ladeluftwärmeübertrager (14) zur Kühlung von Ladeluft in der Ladeluftleitung (9) in Strömungsrichtung der Luft nach dem Ladeluftverdichter (12), ein Absassteuerorgan (15) zur Steuerung und/oder Regelung der durch die Abgasrückführleitung (11) leitbaren Menge an Abgas pro Zeiteinheit und/oder ein Ladeluftsteuerorgan (17) zur Steuerung und/oder Regelung der durch die Ladeluftleitung (9) leitbaren Menge an Ladeluft pro Zeiteinheit soll eine Kondensatbildung in dem Abgas und in der Ladeluft sicher und zuverlässig mit einem geringen technischen Aufwand und kleinen Energlebedarf vermieden werden können.

Diese Aufgabe wird dadurch gelöst, dass die Anordnung (1) einen Abgas-Feuchtigkeitssensor (19) zur Erfassung der Feuchtigkeit des Abgases und/oder einen Ladeluft-Feuchtigkeitssensor (20) zur Erfassung der Feuchtigkeit der Ladeluft umfasst und das Abgassteuerorgan (15) in Abhängigkeit von der Feuchtigkeit des Abgases und/oder das Ladeluftsteuerorgan (17) in Abhängigkeit von der Feuchtigkeit der Ladeluft steuerbar und/oder regelbar ist zur Reduzierung oder Vermeidung von Kondensatbildung in dem Abgas und/oder in der Ladeluft und/oder an der Anordnung (1).

## Beschreibung

Die Erfindung betrifft ein Anordnung zur Rückführung und Kühlung von Abgas einer Brennkraftmaschine gemäß dem Oberbegriff des Anspruches 1, eine Brennkraftmaschine gemäß dem Oberbegriff des Anspruches 10 und ein Verfahren zur Reduzierung oder Vermeidung von Kondensatbildung in einer Anordnung zur Rückführung und Kühlung von Abgas einer Brennkraftmaschine gemäß dem Oberbegriff des Anspruches 11.

Bei Brennkraftmaschinen, insbesondere Dieselmotoren, werden Anordnungen zur Rückführung und Kühlung von Abgas zu der Brennkraftmaschine verwendet. Dabei wird ein Teil des Abgases aus einer Abgasleitung abgezweigt und einer Ladeluftleitung zugeführt. Das abgezweigte Abgas wird dabei in Abgaswärmeübertrager gekühlt. Aufgrund des Abkühlens kann es in dem Abgas, d. h. insbesondere am Abgaswärmeübertrager, zu einer Kondensatbildung kommen. Die Kondensatbildung ist jedoch mit erheblichen Nachteilen verbunden und kann beispielsweise zu Verschmutzungen in der Anordnung, Korrosion und zu einer Beeinträchtigung der Leistung oder der Verbrennung in der Brennkraftmaschine führen. Die Ausbildung von Kondensatsammel- oder Abführeinrichtungen haben jedoch den Nachteil, dass sich gesammeltes Kondenswasser, insbesondere bei einer Verwendung der Brennkraftmaschine in einem Kraftfahrzeug, mitgeführt werden muss und zu einem späteren Zeitpunkt erst abgegeben werden kann.

Die DE 10 2006 033 314 A1 zeigt ein Wärmetauschersystem mit einem über einen Motorkühlkreislauf gekühlten Verbrennungsmotor, dem ein Medium, insbesondere rückgeführtes Abgas und/oder Ladeluft zugeführt werden kann. Das Wärmetauschersystem weist mindestens einen Temperaturregler auf, der die Temperatur mindestens einer von einem zu kühlenden Medium oder von mindestens einem Kühlmittel überströmten Oberfläche des Wärmetauschers und/oder die Kühlmitteleintrittstemperatur in den Wärmetauscher nach unten begrenzt. Nachteiligerweise ist somit eine energieeffiziente Vermeidung einer Kondensatbildung nicht möglich.

Aus der DE 10 2005 008 103 A1 ist eine Abgasturboladerbrennkraftmaschine bekannt. Ein Teil des Abgases wird dabei in einer Abgaskühleinrichtung gekühlt und anschließend wieder der Abgasturboiaderbrennkraftmaschine zur Verbrennung zugeführt. Am unteren Ende von Wärmeüberträgerblöcken sind Kondensatsammel- und/oder Abführeinrichtungen ausgebildet. Sich bildendes Kondenswasser aus dem Abgas muss damit in aufwendiger Weise gesammelt oder abgeführt werden. Insbesondere bei der Verwendung der Abgasturboladerbrennkraftmaschinen in einem Kraftfahrzeug bei einem mobilen Einsatz ist dies mit erheblichen Nachteilen verbunden.

Die DE 10 2005 048 911 A1 zeigt eine Anordnung zur Rückführung und Kühlung von Abgas einer Brennkraftmaschine, insbesondere eines Dieselmotors in einem Kraftfahrzeug, wobei die Brennkraftmaschine eine Abgasleitung mit einer Abgasturbine sowie eine Ansaugleitung mit einem von der Abgasturbine angetriebenen Ladeluftverdichter aufweist. Stromabwärts der Turbine ist eine Entnahmestelle zur Abzweigung einer Abgasrückführleitung und stromaufwärts des Verdichters eine Rückführstelle zur Rückführung der Abgasrückführleitung angeordnet. An der Abgasrückführleitung ist ein Abgaswärmeübertrager und ein Abgasrückfühwentil angeordnet. Ferner ist in der Ansaugleitung ein Ladeluftdrosselorgan angeordnet. In nachteiliger Weise ist somit eine gezielte Vermeidung von Kondensatbildung im Abgas nicht möglich.

Die Aufgabe der vorliegenden Erfindung besteht deshalb darin, eine Anordnung zur Rückführung und Kühlung von Abgas einer Brennkraftmaschine, eine Brennkraftmaschine und ein Verfahren zur Reduzierung oder Vermeidung von Kondensatbildung in einer Anordnung zur Rückführung und Kühlung von Abgas einer Brennkraftmaschine zur Verfügung zu stellen, bei dem eine Kondensatbildung in dem Abgas und in der Ladeluft sicher und zuverlässig mit einem geringen technischen Aufwand und kleinen Energiebedarf vermieden werden kann. Die Anordnung und Brennkraftmaschine sowie das Verfahren sollen zuverlässig im Betrieb arbeiten.

Diese Aufgabe wird gelöst mit einer Anordnung zur Rückführung und Kühlung von Abgas einer Brennkraftmaschine, insbesondere eines Dieselmotors, umfassend eine Abgasleitung, vorzugsweise mit einer Abgasturbine, eine Ladeluftleitung mit einem, vorzugsweise von der Abgasturbine antreibbaren, Ladeluftverdichter, eine Abgasrückführleitung zur Leitung von Abgas von der Abgasleitung zu der Ladeluftleitung, einen Abgaswärmeübertrager zur Kühlung von Abgas in der Abgasrückführleitung und/oder einen Ladeluftwärmeübertrager zur Kühlung von Ladeluft in der Ladeluftleitung in Strömungsrichtung der Luft nach dem Ladeluftverdichter, ein Abgassteuerorgan zur Steuerung und/oder Regelung der durch die Abgasrückführleitung leitbaren Menge an Abgas pro Zeiteinheit und/oder ein Ladeluftsteuerorgan zur Steuerung und/oder Regelung der durch die Ladeluftleitung leitbaren Menge an Ladeluft pro Zeiteinheit, wobei die Anordnung einen Abgas-Feuchtigkeitssensor zur Erfassung der Feuchtigkeit des Abgases und/oder einen Ladeluft-Feuchtigkeitssensor zur Erfassung der Feuchtigkeit der Ladeluft umfasst und das Abgassteuerorgan in Abhängigkeit von der Feuchtigkeit des Abgases und/oder das Ladeluftsteuerorgan in Abhängigkeit von der Feuchtigkeit der Ladeluft steuerbar und/oder regelbar ist zur Reduzierung oder Vermeidung von Kondensatbildung in dem Abgas und/oder in der Ladeluft und/oder an der Anordnung.

In vorteilhafter Weise werden somit von dem Ladeluftfeuchtigkeitssensor und/oder von dem Abgasfeuchtigkeitssensor die Feuchtigkeit des Abgases und/oder der Ladeluft erfasst. Aufgrund der von dem Abgasfeuchtigkeitssensor und dem Ladeluftfeuchtigkeitssensor erfassten Daten können anschließend das Abgassteueroi-gan und/oder das Ladeluftsteuerorgan dahingehend gesteuert und/oder geregelt werden, dass eine Kondensatbildung im Abgas und/oder in der Ladeluft reduziert oder vermieden wird. Die mit einer Bildung von Kondenswasser im Abgas und/oder in der Ladeluft verbundenen Nachteile, insbesondere bei größeren Mengen, können damit in besonders vorteilhafter Weise einfach vermieden werden. Bildet sich beispielsweise im Abgaswärmeübertrager Kondenswasser, weil die relative Feuchtigkeit des Abgases in dem Abgaswärmeübertrager im Bereich von 100 % liegt, wird die Menge an Abgas, welche durch den Abgaswärmeübertrager pro Zeiteinheit geleitet wird, erhöht, so dass sich dadurch das Abgas in dem Abgaswärmeübertrager weniger stark abkühlt. Dadurch sinkt die relative Feuchtigkeit des Abgases und eine Bildung von Kondensat kann in vorteilhafter Weise in dem Abgaswärmeübertrager vermieden oder reduziert werden. Dies gilt analog auch für den Ladeturtwärmeübertrager.

Bei einer Ausbildung des Ladeluftverdichters als Kompressor, der nicht von einer Abgasturbine angetrieben wird, kann somit auch der Ladeluftverdichter das Ladeluftsteuerorgan darstellen, weil der beispielsweise als Kompressor ausgebildete Ladeluftverdichter in seiner Leistung steuerbar und/oder regelbar ist, so dass damit die Menge an Ladeluft, welche durch den Ladeluftwärmeübertrager pro Zeiteinheit steuerbar und/oder regelbar ist, mittels des Ladeluftverdichters beispielsweise als Kompressor steuerbar und/oder regelbar ist.

In einer weiteren Ausgestaltung ist das Abgassteuerorgan ein Abgasventil oder eine Abgasklappe. In einer weiteren Ausgestaltung ist das Ladeluftsteuerorgan ein Ladeluftventil oder eine Ladeluftklappe. Vorzugsweise umfasst das Abgasventil und/oder das Ladeluftventil einen Schieber oder einen Zylinder.

Insbesondere sind von dem Abgas-Feuchtigkeitssensor die relative und/oder die absolute Feuchtigkeit des Abgases erfassbar und/oder sind von dem Ladeluft-Feuchtigkeitssensor die relative und/oder die absolute Feuchtigkeit der Ladeluft erfassbar.

In einer weiteren Ausgestaltung wird das Abgassteuerorgan und/oder das Ladeluftsteuerorgan dahingehend gesteuert und/oder geregelt, dass die relative Feuchtigkeit des Abgases und/oder der Ladeluft kleiner als 100 %, vorzugsweise kleiner als 99 %, 95 %, 90 % oder 80 %, ist. Ist die relative Feuchtigkeit des Abgases und/oder der Ladeluft kleiner als 100 %, tritt im Wesentlichen keine Kondensatbildung im Abgas und/oder in der Ladeluft auf.

In einer ergänzenden Ausführungsform ist der Abgas-Feuchtigkeitssensor im Abgaswärmeübertrager und/oder in der Abgasrückführleitung in Strömungsrichtung des Abgases nach dem Abgaswärmeübertrager angeordnet.

Vorzugsweise ist der Ladeluft-Feuchtigkeitssensor im Ladelufiwärmeübertrager und/oder in der Ladeluftleitung in Strömungsrichtung der Ladeluft nach dem Ladeluftwärmeübertrager angeordnet.

In einer weiteren Ausgestaltung umfasst die Anordnung mehrere Abgas-Feuchtigkeitssensoren und/oder mehrere Ladeluft-Feuchtigkeitsensoren.

In einer Variante ist das Abgassteuerorgan in Abhängigkeit von der Feuchtigkeit des Abgases steuerbar und/oder regelbar und/oder das Ladeluftsteuerorgan ist in Abhängigkeit von der Feuchtigkeit der Ladeluft steuerbar und/oder regelbar zur Reduzierung oder Vermeidung von Kondensatbildung in dem Abgaswärmeübertrager und/oder in der Abgasrückführleitung in Strömungsrichtung des Abgases nach dem Abgaswärmeübertrager und/oder in dem Abgas und/oder in dem Ladeluftwärmeübertrager und/oder in der Ladeluftleitung in Strömungsrichtung der Ladeluft nach dem Ladeluftwärmeübertrager und/oder in der Ladeluft.

Zweckmäßig weist die Anordnung wenigstens ein Mittel, z. B. eine Jalousie oder einen Lüfter, zur Steuerung und/oder Regelung der Menge an Kühlfluid pro Zeiteinheit, welche zu dem Abgaswärmeübertrager und/oder zu dem Ladeluftwärmeübertrager leitbar ist, auf. Als Kühlfluid wird beispielsweise Luft aus der Umgebung der Brennkraftmaschine oder Kühlflüssigkeit zur Kühlung der Brennkraftmaschine verwendet. Das Kühlfluid wird zu dem Abgaswärmeübertrager und/oder zu dem Ladeluftwärmeübertrager geleitet, so dass dadurch das Abgas und/oder die Ladeluft abgekühlt werden kann und die Wärme auf das Kühlfluid übertragen wird.

In einer weiteren Ausführungsform ist das wenigstens eine Mittel in Abhängigkeit von der Feuchtigkeit des Abgases und/oder in Abhängigkeit von der Feuchtigkeit der Ladeluft steuerbar und/oder regelbar zur Reduzierung oder Vermeidung von Kondensatbildung in dem Abgas und/oder in der Ladeluft, insbesondere in dem Abgaswärmeübertrager und/oder in dem Ladeluftwärmeübertrager. Je größer die relative Feuchtigkeit des Abgases und/oder der Ladeluft ist, d. h. je näher die relative Feuchtigkeit des Abgase und/oder der Ladeluft in dem Bereich von 100 % liegt, desto mehr wird die Menge an Kühlfluid, zu dem Abgaswärmeübertrager und/oder zu dem Ladeluftwärmeübertrager geleitet wird, reduziert. Wird die Menge an Kühlfluid reduziert, welche zu dem Abgaswärmeübertrager und/oder zu dem Ladeluftwärmeübertrager geleitet wird, wird das Abgas und/oder die Ladeluft nicht so stark abgekühlt und dadurch die relative Feuchtigkeit des Abgases und/oder der Ladeluft erhöht, so dass dadurch eine Kondensatbildung vermieden wird und umgekehrt.

In einer weiteren Ausgestaltung wird die Menge an Abgas, welche durch den Abgaswärmeübertrager geleitet wird und/oder die Menge an Ladeluft, welche durch den Ladeluftwärmeübertrager geleitet wird, erhöht, und/oder die Menge an Kühlfluid, welche zu dem das Wärmeübertrager und/oder zu dem Ladeluftwärmeübertrager geleitet wird nur reduziert, wenn ein vorgegebener Schwellenwert der relativen Feuchtigkeit des Abgases und/oder der Ladeluft, z. B. 99 %, 98 % oder 96 %, erreicht wird und umgekehrt.

In einer Ausführungsform umfasst die Anordnung eine Steuerungseinheit und/oder von der Steuerungseinheit wird das Abgassteuerorgan und/oder das Ladeluftsteuerorgan in Abhängigkeit von der Partikel- und/oder Stickoxidmengen in dem Abgas gesteuert und/oder geregelt und/oder in der Steuerungseinheit sind Kurven und/oder Tabellen hinterlegt, so dass bei Berücksichtigung der Kurven und/oder Tabellen sowohl minimale oder optimale Mengen an Partikel- und/oder Stickoxiden in dem Abgas als auch eine minimale oder optimale Kondensatbildung bzw. Kondensatvermeidung ausführbar ist und/oder ein in dieser Schutzrechtsanmeldung beschriebenes Verfahren ausführbar ist. Eine starke Kühlung des Abgases ist erforderlich, um die Menge an Partikeln oder Stickoxiden in dem Abgas zu reduzieren. Andererseits wird durch eine starke Abkühlung des Abgases die Kondensatbildung im Abgas erhöht oder erst ermöglicht. Um einerseits eine gute oder minimale bzw. optimale Reduzierung der Menge an Partikel oder Stickoxiden in den Abgasen und andererseits eine Reduzierung oder Vermeidung von Kondensatbildung in dem Abgas zu erreichen, sind Kurven und/oder Tabellen hinterlegt, die die beiden angestrebten Zielparameter, nämlich die Reduzierung der Menge an Partikeln und/oder Stickoxiden in dem Abgas und die Reduzierung oder Vermeidung von Kondensatbildung in dem Abgas angemessen berücksichtigen für einen insgesamt optimale Betrieb der Anordnung oder der Brennkraftmaschine. Dadurch können sowohl eine gute Reduzierung der Verringerung der Menge an Partikel und/oder Stickoxiden in dem Abgas als auch eine gute Vermeidung oder Reduzierung von Kondensatbildung in dem Abgas erreicht werden.

Erfindungsgemäße Brennkraftmaschine, insbesondere Dieselmotor, mit einer Anordnung zur Rückführung und Kühlung von Abgas Brennkraftmaschine, wobei die Anordnung gemäß einer in dieser Schutzrechtsanmeldung beschriebenen Anordnung ausgebildet ist und/oder ein in dieser Schutzrechtsanmeldung beschriebenes Verfahren ausführbar ist.

Erfindungsgemäßes Verfahren zur Reduzierung oder Vermeidung von Kondensatbildung in einer Anordnung zur Rückführung und Kühlung von Abgas einer Brennkraftmaschine, insbesondere einer in dieser Schutzrechtsanmeldung beschriebenen Anordnung, mit den Schritten: Ansaugen von Ladeluft, Verdichten der Ladeluft in einem Ladeluftverdichter, Leiten der verdichteten Luft in einer Ladeluftleitung zu der Brennkraftmaschine, Leiten von Abgas von der Brennkraftmaschine durch eine Abgasleitung in die Umgebung, Leiten von Abgas von der Abgasleitung durch eine Abgasrückführleitung in die Ladeluftleitung, Kühlen des durch die Abgasrückführleitung geleiteten Abgases in Abgaswärmeübertrager und/oder Kühlen der durch die Ladeluftleitung geleiteten Ladeluft in einem Ladeluftwärmeübertrager, Steuern und/oder Regeln der durch die Abgasrückführleitung pro Zeiteinheit geleiteten Menge an Abgas mittels eines Abgassteuerorganes und/oder Steuern und/oder Regeln der durch die Ladeluftleitung pro Zeiteinheit geleiteten Menge an Ladeluft mittels eines Ladeiuftsteuerorganes, wobei von einem Abgas-Feuchtigkeitssensor die Feuchtigkeit des Abgases erfasst wird und/oder von einem Ladeluft- Feuchtigkeitssensor die Feuchtigkeit der Ladeluft erfasst wird und das Abgassteuerorgan in Abhängigkeit von der Feuchtigkeit des Abgases gesteuert und/oder geregelt wird und/oder das Ladeluftsteuerorgan in Abhängigkeit von der Feuchtigkeit der Ladeluft gesteuert und/oder geregelt wird zur Reduzierung oder Vermeidung von Kondensatbildung in dem Abgas und/oder in der Ladeluft und/oder in der Anordnung. In vorteilhafter Weise wird somit die Feuchtigkeit des Abgases und/oder der Ladeluft erfasst, so dass damit eine gezielte Steuerung und/oder Regelung zur Vermeidung von Kondensatbildung möglich ist, weil der entscheidende Parameter für eine Kondensatbildung die Feuchtigkeit, insbesondere die relative Feuchtigkeit, des Abgases und/oder der Ladeluft ist.

In einer ergänzenden Variante wird die Feuchtigkeit des Abgases in dem Abgaswärmeübertrager und/oder in der Abgasrückführleitung, insbesondere in Strömungsrichtung des Abgases nach dem Abgaswärmeübertrager, erfasst und/oder die Feuchtigkeit der Ladeluft in dem Ladeluftwärmeübertrager und/oder in der Ladeluftleitung, insbesondere in Strömungsrichtung des Abgases nach Ladeluftwärmeübertrager, erfasst wird.

Je höher die, insbesondere relative, Feuchtigkeit des Abgases ist, desto größer ist vorzugsweise die Menge an Abgas pro Zeiteinheit, die durch den Abgaswärmeübertrager geleitet wird und umgekehrt, so dass vorzugsweise die relative Feuchtigkeit des Abgases kleiner als 100 %, 99 %, 98 %, 90 % oder 80 % ist und/oder je höher die, insbesondere relative, Feuchtigkeit der Ladeluft ist, desto größer ist vorzugsweise die Menge an Ladeluft pro Zeiteinheit, die durch den Ladeluftwärmeübertrager geleitet wird und umgekehrt, so dass vorzugsweise die relative Feuchtigkeit der Ladeluft kleiner als 100 %, 99 %, 98 %, 90 % oder 80 % ist. Die Menge an Abgas, die pro Zeiteinheit durch den Abgaswärmeübertrager geleitet wird, wird mittels des Abgassteuerorgans gesteuert und/oder geregelt. In analoger Weise wird die Menge an Ladeluft, die durch den Ladeluftwärmeübertrager pro Zeiteinheit geleitet wird, mittels des Ladeluftsteuerorgans gesteuert und/oder geregelt.

In einer weiteren Ausgestaltung wird erst ab einem vorgegebenen Schwellenwert der relativen Feuchtigkeit des Abgases und/oder der Ladeluft, z. B. 99 %, 98 %, 95 % oder 90 %, die Menge an Abgas und/oder Ladeluft, die durch den Abgaswärmeübertrager und/oder den Ladeluftwärmeübertrager geleitet wird, reduziert. Erst beim Erreichen des Schwellenwertes der relativen Feuchtigkeit des Abgases und/oder der Ladeluft, wird die Menge an Abgas und/oder Ladeluft, welche durch den Abgaswärmeübertrager und/oder den Ladeluftwärmeübertrager geleitet wird, reduziert. Bis zum Erreichen des Schwellenwertes wird somit die relative Feuchtigkeit des Abgases und/oder der Ladeluft vom Abgassteuerorgan oder vom Ladeluftsteuerorgan nicht berücksichtigt. Wird der Schwellenwert wieder unterschritten, wird die relative Feuchtigkeit nicht mehr berücksichtigt für die Menge an Abgas und/der Ladeluft.

In einer weiteren Variante wird die Menge an Kühlfluid pro Zeiteinheit, welche zu dem Abgaswärmeübertrager und/oder zu dein Ladeluftwärmeübertrager geleitet wird in Abhängigkeit von der Feuchtigkeit des Abgases und/oder der Feuchtigkeit der Ladeluft gesteuert und/oder geregelt und/oder je höher die, insbesondere relative, Feuchtigkeit des Abgases ist, desto kleiner ist die Menge an Kühlfluid pro Zeiteinheit, welche zu dem Abgaswärmeübertrager geleitet wird und umgekehrt, so dass vorzugsweise die relative Feuchtigkeit des Abgases kleiner als 100 %, 99 %, 98 %, 90 % oder 80 % ist, und/oder je höher die, insbesondere relative, Feuchtigkeit der Ladeluft ist, desto kleiner ist die Menge an Kühlfluid pro Zeiteinheit, welche zu dem Ladelufiwärmeübertrager geleitet wird, so dass vorzugsweise die relative Feuchtigkeit der Ladeluft kleiner als 100 %, 99 % oder 95 % ist.

In einer weiteren Ausgestaltung wird die Partikel- und/oder Stickoxidmenge in dem Abgas erfasst und in Abhängigkeit von der Partikel- und/oder Stickoxidmenge wird das Abgassteuerorgan gesteuert und/oder geregelt und/oder in Abhängigkeit von der Partikel- und/oder Stickoxidmenge wird das Ladeluftsteuerorgan gesteuert und/oder geregelt und/oder in Abhängigkeit von der Partikel- und/oder Stickoxidmenge die Menge an Kühlfluid pro Zeiteinheit gesteuert und/oder geregelt, welche zu dem Abgaswärmeübertrager und/oder zu dem Ladeluftwärmeübertrager geleitet wird und vorzugsweise hinterlegte Kurven und/oder Tabellen zur Steuerung und/oder Regelung verwendet werden, so dass sowohl eine minimale oder optimale Partikel- und/oder Stickoxidmenge in dem Abgas als auch eine minimal oder optimale Kondensatbildung bzw. Kondensatvermeidung ausgeführt wird.

In einer weiteren Ausgestaltung umfasst die Anordnung eine Entnahmestelle an der Abgasleitung zur Abzweigung von Abgas von der Abgasleitung und eine Rückführstelle an der Ladeluftleitung zur Rückführung von Abgas in die Ladeluftleitung.

Im Nachfolgenden wird ein Ausführungsbeispiel der Erfindung unter Bezugnahme auf die beigefügte Zeichnung näher beschrieben. Es zeigt:

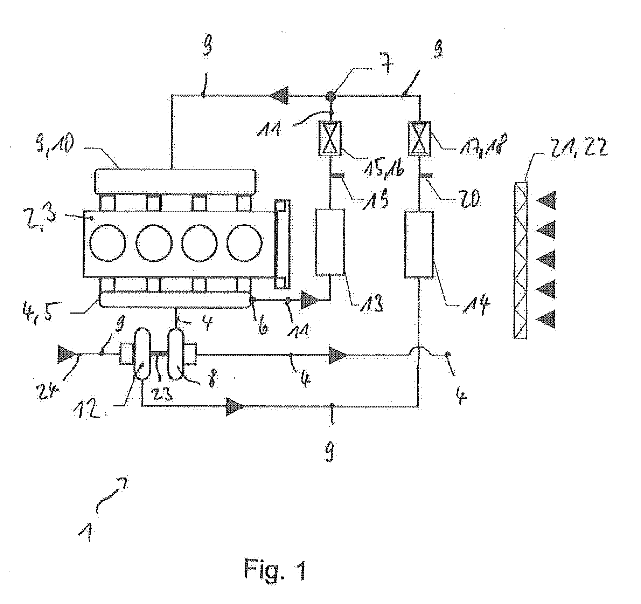

- Fig. 1: ein vereinfachtes Systembild einer Brennkraftmaschine mit einer Anordnung zur Rückführung und Kühlung von Abgas der Brennkraftmaschine.

In Fig. 1 ist ein Systembild einer Brennkraftmaschine 2 mit einer Anordnung 1 zur Rückführung und Kühlung von Abgas der Brennkraftmaschine 2 dargestellt. Die Brennkraftmaschine 2 ist dabei ein Dieselmotor 3 und die Rückführung eines Teils des Abgases dient dazu, die Emissionen an Partikeln und Stickoxiden durch den Dieselmotor 3 im Abgas zu verringern.

Das aus der Brennkraftmaschine 2 ausströmende Abgas wird zunächst in einem Abgaskrümmer 5 als Abgasleitung 4 gesammelt, anschließend durch die Abgasleitung 4 zu einer Abgasturbine 8 geleitet und anschließend von der Abgasturbine 8 durch einen weiteren Abschnitt der Abgasleitung 4 in die Umgebung abgegeben. Das aus der Brennkraftmaschine 2 ausströmende Abgase treibt die Abgasturbine 8 an. Von der Abgasturbine 8 wird ein Ladeluftverdichter 12, der ebenfalls als Turbine ausgebildet ist, angetrieben. Hierzu sind die Abgasturbine 8 und der Ladeluftverdichter 12 mittels einer Welle 23 miteinander verbunden. Der Ladeluftverdichter 12 saugt durch eine Ladeluftleitung 9 an einer Einsaugöffnung 24 Luft aus der Umgebung der Brennkraftmaschine 2 an. Die durch die Einsaugöffnung 24 angesaugte Ladeluft wird dabei von dem Ladeluftverdichter 12 verdichtet und anschließend unter Druck der Ladeluftleitung 9 zugeführt. In der Ladeluftleitung 9 ist ein Ladeluftwärmeübertrager 14, angeordnet. Die verdichtete und damit erwärmte Ladeluft wird in dem Ladeluftwärmeübertrager 14 gekühlt, indem ein Kühlfluid, d. h. Umgebungsluft, zu dem Ladeluftwärmeübertrager 14 geleitet wird und damit die erwärmte und verdichtete Ladeluft kühlt. In Strömungsrichtung der Ladeluft ist nach dem Ladeluftwärmeübertrager 14 ein Ladeluft-Feuchtigkeitssensor 20 an der Ladeluftleitung 9 angeordnet. Der Ladeluft-Feuchtigkeitssensor 20 erfasst in der Ladeluftleitung 9 die relative Feuchtigkeit der Ladeluft. In Strömungsrichtung der Ladeluft in der Ladeluftleitung 9 ist nach dem Ladeluft-Feuchtigkeitssensor 20 ein als Ladeluftventil 18 ausgebildetes Ladeluftsteuerorgan 17 angeordnet. Das Ladeluftsteuerorgan 17 dient zur Steuerung und/oder Regelung der durch die Ladeluftleitung 9 geleiteten Menge an Ladeluft pro Zeiteinheit.

An einer Entnahmestelle 6 in dem Abgaskrümmer 5 wird Abgas in eine Abgasrückführleitung 11 eingeleitet. In der Abgasrückführleitung 11 ist in analoger Weise zu der Ladeluftleitung 9 ein Abgaswärmeübertrager 13, ein Abgas-Feuchtigkeitssensor 19 und ein als Abgasventil 16 ausgebildetes Abgassteuerorgan 15 angeordnet. In dem Abgaswärmeübertrager 13 wird des Abgas mittels des Kühlfluides als Umgebungsluft abgekühlt und in dem Abgasfeuchtigkeitssensor 19 wird die relative Feuchtigkeit des Abgases erfasst oder gemessen. Das Abgassteuerorgan 15 dient zur Steuerung und/oder Regelung der durch die Abgasrückführleitung 11 und den Abgaswärmeübertrager 13 geleiteten Menge an Abgas pro Zeiteinheit. Das durch die Abgasrückführleitung 11 geleitete Abgas wird an einer Rückführstelle 7 in der Ladeluftleitung 9 der Ladeluftleitung 9 zugeführt. In Strömungsrichtung der Ladeluft nach der Rückführstelle 7 befindet sich somit sowohl Luft aus der Umgebung der Brennkraftmaschine 2 als auch Abgas, das sich somit mischt. Dieses Gemisch wird anschließend in einen Einlasskrümmer 10 als Ladeluftleitung 9 eingeleitet und von dort für die Verbrennung in Brennräumen der Brennkraftmaschine 2 als Hubkolbenbrennkraftmaschine genützt. Das Abgas wird dabei in Strömungsrichtung des Abgases in der Abgasleitung 4 vor der Abgasturbine 8 entnommen, so dass es sich um eine Hochdruckabgasrückführung handelt. Abweichend hiervon kann es sich auch um eine Niederdruckabgasrückführung handeln, bei der das Abgas in Strömungsrichtung des Abgases in der Abgasleitung 4 erst nach der Abgasturbine 8 entnommen wird (nicht dargestellt).

Die Anordnung 1 umfasst außerdem eine Jalousie 22 als Mittel 21 zur Steuerung und/oder Regelung an Kühlfluid, welche pro Zeiteinheit zu dem Abgaswärmeübertrager 13 und dem Ladeluftwärmeübertrager 14 geleitet werden kann, Das Mittel 21 kann dabei auch ein Lüfter (nicht dargestellt) sein, sofern zu dem Abgaswärmeübertrager 13 und dem Ladeluftwärmeübertrager 14 Umgebungsluft mittels des Lüfters geleitet wird und durch eine Steuerung der Leistung des Lüfters kann somit auch die Menge an Kühlfluid pro Zeiteinheit gesteuert und/oder geregelt werden, weiche zu dem Abgaswärmeüberträger 13 und dem Ladeluftwärmeübertrager 14 geleitet wird.

In dem Abgaswarmeübertrager 13 wird das Abgas gekühlt, um den Ausstoß an Partikel und Stickoxiden im Abgas der Brennkraftmaschine 2 zu verringern. Bedingt durch das Abkühlen kann dabei der Taupunkt des Abgases unterschritten werden, so dass es dadurch zu einer nachteiligen Kondensatbildung, insbesondere im Bereich des Abgaswarmeübertragers 13 und der daran anschließenden Abgasrückführleitung 11, kommen kann. Der Abgas-Feuchtigkeitssensor 19 erfasst die relative Feuchtigkeit des Abgases in Strömungsrichtung des Abgases nach dem Abgaswärmeübertrager 13 in der Abgasrückführleitung 11. Wird von dem Abgasfeuchtigkeitssensor 19 ein Ansteigen der relativen Feuchtigkeit auf einen vorgegebenen Schwellenwert, z. B. 95 % oder 98 %, gemessen, werden Maßnahmen zur Verringerung der relativen Feuchtigkeit des Abgases ergriffen, um eine Bildung von Kondensat in dem Abgas, d. h. insbesondere im Abgaswärmeübertrager 13 und in der Abgasrückführleitung 11, zu vermeiden. Nach dem Erreichen des vorgegebenen Schwellenwertes der relativen Feuchtigkeit des Abgases wird von dem Abgassteuerorgan 15 die Menge an Abgas erhöht, welche durch die Abgasrückführleitung 11 und Abgaswärmeübertrager 13 geleitet wird. Bei einer Erhöhung dieser Menge wird das Abgas in dem Abgaswärmeübertrager 13 weniger stark gekühlt, so dass sich damit die Temperatur des Abgases erhöht und somit die relative Feuchtigkeit des Abgases verringert wird. Damit kann die Bildung von Kondensat im Abgas reduziert oder ausgeschlossen werden. Zusätzlich ist es auch möglich, beim Erreichen des Schwellenwertes der relativen Feuchtigkeit des Abgases die Menge an Kühlfluid, welcher zu dem Abgaswärmeübertrager 13 geleitet wird, zu verringern, so dass dadurch das Abgas in dem Abgaswärmeübertrager 13 weniger stark gekürzt wird und sich somit die Temperatur des Abgases erhöht, Damit kann auch die relative Feuchtigkeit des Abgases verringert werden.

Darüber hinaus ist es auch möglich, zur Reduzierung oder Vermeidung von Kondensatbildung in dem Abgas die Menge an Abgas pro Zeiteinheit, die durch den Abgaswärmeübertrager 13 geleitet wird, dahingehend zu steuern oder zur regeln, dass je höher die relative Feuchtigkeit des Abgases in dem Abgaswärmeübertrager 13 ist, desto größer die Menge an Abgas pro Zeiteinzeit ist, die durch den Abgaswärmeübertrager 13 und die Abgasrückführleitung 11 geleitet wird und umgekehrt, Damit wird nicht erst ab einem vorgegebenen Schwellenwert der relativen Feuchtigkeit des Abgases die Menge an Abgas pro Zeiteinheit erhöht, sondern in einem vorgegebenen Bereich der relativen Feuchtigkeit bei einer Erhöhung der relativen Feuchtigkeit des Abgases kontinuierlich die Menge an Abgas pro Zeiteinheit aufgrund vorgegebener Steuerkurven erhöht. Dies gilt analog auch für die an Kühlfluid, weicher zu dem Abgaswärmeübertrager 13 geleitet wird. Je höher die relative Feuchtigkeit des Abgases ist, desto kleiner wird die Menge an Kühlfluid pro Zeiteinheit, welche zu dem Abgaswärmeübertrager 13 geleitet wird, gesteuert und/oder geregelt mittels der Jalousie 22.

Die Reduzierung oder Vermeidung von Kondensatbildung in der Ladeluft wird in analoger Weise zu dem Abgas gesteuert und/oder geregelt. Der Ladeluft-Feuchtigkeitssensor 20 wird analog wie der Abgas-Feuchtigkeitssensor und das Ladeluftventil 18 wird analog wie das Abgasventil 16 genutzt

Insgesamt betrachtet sind mit dem erfindungsgemäßen Anordnung 1 zur Rückführung und Kühlung von Abgas in der Brennkraftmaschine 2 und dem erfindungsgemäßen Verfahren zur Reduzierung oder Vert-neidung von Kondensatbildung im Abgas und in der Ladeluft erhebliche Vorteile verbunden. Aufgrund der Erfassung der relativen Feuchtigkeit des Abgases und/oder der Ladeluft kann gezielt vom entscheidenden Parameter zur Vermeidung einer Kondensatbildung, nämlich der relativen Feuchtigkeit, die Bildung von Kondensat reduziert oder vermieden werden. Dabei ist im Wesentlichen nur ein sehr geringer Energieaufwand erforderlich, weil die Reduzierung oder Vermeidung von Kondensat dadurch erreicht wird, dass die Menge an Abgas oder Ladeluft, welche durch den Abgaswärmeübertrager 13 oder den Ladeluftwärmeübertrager 14 geleitet wird, einfach mittels eines Abgasventils 16 und/oder eines Ladeluftventils 18 gesteuert oder geregelt wird. Darüber hinaus kann dies auch mittels der Jalousie 22 erfolgen. Dies ist insbesondere bei einem mobilen Einsatz der Brennkraftmaschine 2 in einem Kraftfahrzeug von Vorteil, bei welcher bildendes Kondenswasser nicht an die Umgebung abgegeben werden darf, sondern dieses in nachteiliger Weise im Kraftfahrmitgeführt werden muss. Dadurch braucht in vorteilhafter Weise im Kraftfahrzeug kein oder nur eine geringe Menge an Kondensat mitgeführt werden.

### Bezugszeichenliste

- 1: Anordnung
- 2: Brennkraftmaschine
- 3: Dieselmotor
- 4: Abgasleitung
- 5: Abgaskrümmer
- 6: Entnahmestelle an der Abgasleitung
- 7: Rückführstelle an der Ladeluftleitung
- 8: Abgasturbine
- 9: Ladeluftleitung
- 10: Einlaßkrümmer
- 11: Abgasrückführleitung
- 12: Ladeluftverdichter
- 13: Abgaswärmeübertrager
- 14: Ladetuftwärmeübertrager
- 15: Abgassteuerorgan
- 16: Abgasventil
- 17: Ladelufisteuerorgan
- 18: Ladeluftventil
- 19: Abgas-Feuchtigkeitssensor
- 20: Ladeluft-Feuchtigkeitssensor
- 21: Mittel zur Steuerung der Menge an Kühlfuid
- 22: Jalousie
- 23: Welle
- 24: Einsaugöffnung

## Patentansprüche

1. Anordnung (1) zur Rückführung und Kühlung von Abgas einer Brennkraftmaschine (2), insbesondere eines Dieselmotors (3), umfassend
- eine Abgasleitung (4), vorzugsweise mit einer Abgasturbine (8),
- eine Ladeluftleitung (9) mit einem, vorzugsweise von der Abgasturbine (8) antreibbaren, Ladeluftverdichter (12),
- eine Abgasrückführleitung (11) zur Leitung von Abgas von der Abgasleitung (4) zu der Ladeluftleitung (9),
- einen Abgaswärmeübertrager (13) zur Kühlung von Abgas in der Abgasrückführleitung (11) und/oder einen Ladeiuftwärmeübertrager (14) zur Kühlung von Ladeluft in der Ladeluftleitung (9) in Strömungsrichtung der Luft nach dem Ladeluftverdichter (12),
- ein Abgassteuerorgan (15) zur Steuerung und/oder Regelung der durch die Abgasrückführleitung (11) leitbaren Menge an Abgas pro Zeiteinheit und/oder ein Ladeluftsteuerorgan (17) zur Steterung und/oder Regelung der durch die Ladeluftleitung (9) leitbaren Menge an Ladeluft pro Zeiteinheit,
**dadurch gekennzeichnet, dass**
die Anordnung (1) einen Abgas-Feuchtigkeitssensor (19) zur Erfassung der Feuchtigkeit des Abgases und/oder einen Ladeluft-Feuchtigkeitssensor (20) zur Erfassung der Feuchtigkeit der Ladeluft umfasst und das Abgassteuerorgan (15) in Abhängigkeit von der Feuchtigkeit des und/oder das Ladeluftsteuerorgan (17) in Abhängigkeit von der Feuchtigkeit der Ladeluft steuerbar und/oder regelbar ist zur Reduzierung oder Vermeidung von Kondensatbildung in dem Abgas und/oder in der Ladeluft und/oder an der Anordnung (1).

2. Anordnung nach Anspruch 1, **dadurch gekennzeichnet, dass** von dem Abgas-Feuchtigkeitssensor (19) die relative und/oder die absolute Feuchtigkeit des Abgases erfassbar ist und/oder von dem Ladeluft-Feuchtigkeitssensor (20) die relative und/oder die absolute Feuchtigkeit der Ladeluft erfassbar ist.

3. Anordnung nach Anspruch 1 oder 2, **dadurch gekennzeichnet, dass** das Abgassteuerorgan (15) und/oder das Ladeluftsteuerorgan (17) dahingehend gesteuert und/oder geregelt wird, dass die relative Feuchtigkeit des Abgases und/oder der Ladeluft kleiner als 100 %, vorzugsweise kleiner als 99 %, 95 %, 90 % oder 80 %, ist.

4. Anordnung nach einem oder mehreren der vorhergehenden Ansprüche, **dadurch gekennzeichnet, dass** der Abgas-Feuchtigkeitssensor (19) im Abgaswärmeübertrager (13) und/oder in der Abgasrückführleitung (11) in Strömungsrichtung des Abgases nach dem Abgaswärmeübertrager (13) angeordnet ist.

5. Anordnung nach einem oder mehreren der vorhergehenden Ansprüche, **dadurch gekennzeichnet, dass** der Ladeluft-Feuchtigkeitssensor (20) im Ladeluftwärmeübetrager (14) und/oder in der Ladeluftleitung (9) in Strömungsrichtung der Ladeluft nach dem Ladeluftwärmeübertrager (14) angeordnet ist.

6. Anordnung nach einem oder mehreren der vorhergehenden Ansprüche, **dadurch gekennzeichnet, dass** das Abgassteuerorgan (15) in Abhängigkeit von der Feuchtigkeit des Abgases steuerbar und/oder regelbar ist und/oder das Ladelufisteuerorgan (17) in Abhängigkeit von der Feuchtigkeit der Ladeluft steuerbar und/oder regelbar ist zur Reduzierung oder Vermeidung von Kondensatbildung in dem Abgaswärmeübeürager (13) und/oder in der Abgasrückführleitung (11) in Strömungsrichtung des Abgases nach dem Abgaswärmeübertrager (13) und/oder in dem Abgas und/oder in dem Ladeluftwärmeübertrager (14) und/oder in der Ladeluftleitung (9) in Strömungsrichtung der Ladeluft nach dem Ladeluftwärmeübertrager (14) und/oder in der Ladeluft.

7. Anordnung nach einem oder mehreren der vorhergehenden Ansprüche, **dadurch gekennzeichnet, dass** die Anordnung (1) wenigstens ein Mittel (21), z. B. eine Jalousie (22) oder einen Lüfter, zur Stegerung und/oder Regelung der Menge an Kühlfluid pro Zeiteinheit, weilche zu dem Abgaswärmeübertrager (13) und/oder zu dem Ladeluftwärmeübertrager (14) leitbar ist, aufweist.

8. Anordnung nach Anspruch 7, **dadurch gekennzeichnet, dass** das wenigstens eine Mittel (21) in Abhängigkeit von der Feuchtigkeit des Abgases und/oder in Abhängigkeit von der Feuchtigkeit der Ladeluft steuerbar und/oder regelbar ist zur Reduzierung oder Vermeidung von Kondensatbildung in dem Abgas und/oder in der Ladeluft, insbesonderte in dem Abgaswärmeübertrager (13) und/oder in dem Ladeluftwärmeübertrager (14).

9. Anordnung nach einem oder mehreren der vorhergehenden Ansprüchen, **dadurch gekennzeichnet, dass** die Anordnung (1) eine Steuerungseinheit umfasst und/oder von der Steuerungseinheit das Abgassteuerorgan (15) und/oder das Ladeluftsteuerorgan (17) in Abhängigkeit von der Partikel- und/oder Stickoxidmengen in dem Abgas gesteuert und/oder geregelt wird und/oder in der Steuerungseinheit Kurven und/oder Tabellen hinterlegt sind, so dass bei Berücksichtigung der Kurven und/oder Tabellen sowohl minimale oder optimale Mengen an Partikel- und/oder Stickoxiden in dem Abgas als auch eine minimale oder optimale Kondensatbildung bzw. Kondensatvermeidung ausführbar ist und/oder ein Verfahren gemäß einem oder mehrerer der Ansprüche 11 bis 15 ausführbar ist.

10. Brennkraftmaschine (2), insbesondere Dieselmotor (3), mit einer Anordnung (1) zur Rückführung und Kühlung von Abgas einer Brennkraftmaschine (2), **dadurch gekennzeichnet, dass** das Anordnung (1) gemäß einem oder mehreren der vorhergehenden Ansprüche ausgebildet ist und/oder ein Verfahren gemäß einem oder mehrerer der Ansprüche 11 bis 15 ausführbar ist.

11. Verfahren zur Reduzierung oder Vermeidung von Kondensatbildung in einer Anordnung (1) zur Rückführung und Kühlung von Abgas einer Brennkraftmaschine (2), insbesondere einer Anordnung gemäß einem oder mehreren der Ansprüche 1 bis 10, mit den Schritten:
- Ansaugen von Ladeluft, Verdichten der Ladeluft in einem Ladeluftverdichter (12), Leiten der verdichteten Luft in einer Ladeluftleitung (9) zu der Brennkraftmaschine (2),
- Leiten von Abgas von der Brennkraftmaschine (2) durch eine Abgasleitung (4) in die Umgebung,
- Leiten von Abgas von der Abgasleitung (4) durch eine Abgasrückführleitung (11) in die Ladeluftleitung (9),
- Kühlen des durch die Abgasrückführleitung (11) geleiteten Abgases in einem Abgaswärmeübertrager (13) und/oder Kühlen der durch die Ladeluftleitung (9) geleiteten Ladeluft in einem Ladeluftwärmeübertrager (14),
- Steuern und/oder Regeln der durch die Abgasrückführleitung (11) pro Zeiteinheit geleiteten Menge an Abgas mittels eines Abgassteuerorganes (15) und/oder Steuern und/oder Regeln der durch die Ladeluftleitung (9) pro Zeiteinheit geleiteten Menge an Ladeluft mittels eines Ladeluftsteuerorganes (17),
**dadurch gekennzeichnet, dass**
von einem Abgas-Feuchtigkeitssensor (19) die Feuchtigkeit des Abgases erfasst wird und/oder von einem Ladeluft-Feuchtigkeitssensor (20) die Feuchtigkeit der Ladeluft erfasst wird und das Abgassteuerorgan (15) in Abhängigkeit von der Feuchtigkeit des Abgases gesteuert und/oder geregelt wird und/oder das Ladeluftsteuerorgan (17) in Abhängigkeit von der Feuchtigkeit der Ladeluft gesteuert und/oder geregelt wird zur Reduzierung oder Vermeidung von Kondensatbildung in dem Abgas und/oder in der Ladeluft und/oder in der Anordnung (1).

12. Verfahren nach Anspruch 11, **dadurch gekennzeichnet, dass** die Feuchtigkeit des Abgases in dem Abgaswärmeübertrager (13) und/oder in der Abgasrückführleitung (11), insbesondere in Strömungsrichtung des Abgases nach dem Abgaswärmeübertrager (13), erfasst wird und/oder die Feuchtigkeit der Ladeluft in dem Ladeluftwärmeübertrager (14) und/oder in der Ladeluftleitung (9), insbesondere in Strömungsrichtung des Abgases nach dem Ladeluftwärmeübertrager (14), erfasst wird.

13. Verfahren nach Anspruch 11 oder 12, **dadurch gekennzeichnet, dass** je höher die, insbesondere relative, Feuchtigkeit des Abgases ist, desto größer die Menge an Abgas pro Zeiteinheit ist, die durch den Abgaswärmeübertrager (13) geleitet wird und umgekehrt, so dass vorzugsweise die relative Feuchtigkeit des Abgases kleiner als 100%, 99 %, 98 %, 90 % oder 80 % ist, und/oder je höher die, insbesondere relative, Feuchtigkeit der Ladeluft ist, desto größer die Menge an Ladeluft pro Zeiteinheit ist, die durch den Ladeluftwärmeübertrager (14) geleitet wird und umgekehrt, so dass vorzugsweise die relative Feuchtigkeit der Ladeluft kleiner als 100 %, 99 %, 98 %, 90 % oder 80 % ist.

14. Verfahren nach einem oder mehreren der Ansprüche 11 bis 13, **dadurch gekennzeichnet, dass** die Menge an Kühlfluid pro Zeiteinheit, welche zu dem Abgaswärmeübertrager (13) und/oder zu dem Ladeluftwärmeübertrager (14) geleitet wird in Abhängigkeit von der Feuchtigkeit des Abgases und/oder der Feuchtigkeit der Ladeluft gesteuert und/oder geregelt wird und/oder je höher die, insbesondere relative, Feuchtigkeit des Abgases ist, desto kleiner die Menge an Kühlfluid pro Zeiteinheit ist, welche zu dem Abgaswärmeübertrager (13) geleitet wird und umgekehrt, so dass vorzugsweise die relative Feuchtigkeit des Abgases kleiner als 100 %, 99 %, 98 %, 90 % oder 80 % ist, und/oder je höher die, insbesondere relative, Feuchtigkeit der Ladeluft ist, desto kleiner die Menge an Kühlfluid pro Zeiteinheit ist, welche zu dem Ladeluftwärmeübertrager(14) geleitet wird, so dass vorzugsweise die relative Feuchtigkeit der Ladeluft kleiner als 100 %, 99 % oder 95 % ist.

15. Verfahren nach einem oder mehreren der Ansprüche 11 bis 14, **dadurch gekennzeichnet, dass** die Partikel- und/oder Stickoxidmenge in dem Abgas erfasst wird und in Abhängigkeit von der Partikel- und/oder Stickoxidmenge das Abgassteuerorgan (15) gesteuert und/oder geregelt wird und/oder in Abhängigkeit von der Partikel- und/oder Stickoxidmenge das Ladeluftsteuerorgan (17) gesteuert und/oder geregelt wird und/oder in Abhängigkeit von der Partikel- und/oder Stickoxidmenge die Menge an Kühlfluid pro Zeiteinheit, welche zu dem Abgaswärmeübertrager (13) und/oder zu dem Ladeluftwärmeübertrager (14) geleitet wird, gesteuert und/oder geregelt wird und vorzugsweise hinterlegte Kurven und/oder Tabellen zur Steuerung und/oder Regelung verwendet werden, so dass sowohl eine minimale oder optimale Partikel- und/oder Stickoxidmenge in dem Abgas als auch eine minimal oder optimale Kondensatbildung bzw. Kondensatvermeidung ausgeführt wird.
